# FASCICULE DE BREVET EUROPEEN

(11) **EP 0 773 097 B1**
(45) Date de publication et mention de la délivrance du brevet: **11.04.2001**
(21) Numéro de dépôt: 95810708.8
(22) Date de dépôt: 10.11.1995
(51) Int. Cl.: B29C 47/56, B29C 47/06

(54) **Tête d'extrusion munie d'un dispositif de changement de couleur du produit extrudé**
Extrusionsdüse mit Farbwechselvorrichtung, zur Veränderung der Farbe des extrudiertes Objekts
Extrusion die with device for changing the colour of the extruded article

(43) Date de publication de la demande: 14.05.1997
(73) Titulaire: Nokia - Maillefer Holding SA, 1024 Ecublens (CH)
(72) Inventeur: Geider, Ernst, CH-1025 St-Sulpice (CH); Jaun, Hans, CH-1093 La Conversion (CH)
(74) Mandataire: BOVARD AG - Patentanwälte

(56) Documents cités:
- WO-A-87/05258
- DE-A- 2 712 910
- DE-A- 2 921 943
- DE-A- 3 735 279
- FR-A- 566 870

## Description

La présente invention concerne une tête d'extrusion conforme au préambule de la revendication 1. Elle concerne aussi une ligne d'extrusion munie d'une telle tête d'extrusion.

Deux méthodes au moins sont connues pour extruder un produit, par exemple un conducteur isolé et permettant que ce produit ait une couleur déterminée.

Une première méthode, la plus ancienne, ne nécessite qu'une seule extrudeuse dans la trémie de laquelle un colorant maître (Master Batch) de la couleur désirée est introduit simultanément avec les granulés d'isolation. Dans le cas d'un conducteur isolé, toute l'épaisseur d'isolation aura donc la couleur désirée. Cette méthode comporte de nombreux inconvénients, en particulier lorsqu'on désire changer la couleur du produit, on peut agir selon deux variantes, soit on arrête la machine afin de complètement la purger et la nettoyer avant de la recharger d'un nouveau mélange coloré, soit on introduit directement le nouveau colorant maître dans la trémie de la machine en fonctionnement, conduisant ainsi à l'extrusion d'une certaine quantité de matière contenant un mélange à proportion variable des deux colorants jusqu'à ce que toutes traces du premier colorant aient disparu du produit extrudé. Ces deux variantes entraînent une diminution notable de la productivité de l'extrudeuse, de même qu'une forte consommation de colorant maître, produit onéreux. De plus, la présence du colorant maître à l'intérieur de l'isolant peut altérer ou modifier ses valeurs diélectriques.

La deuxième méthode, décrite en particulier dans le brevet EP-B-0.259.389, consiste à prévoir une isolation en deux couches, une première couche inférieure d'isolation, généralement constituée d'un produit extrudé incolore, à laquelle est superposée une deuxième couche extérieure colorée relativement mince. Les qualités diélectriques d'un tel produit extrudé en deux couches sont nettement plus stables que celles d'un produit dont toute la masse est colorée, vu que le produit isolant a toujours la même composition et vu que la couche colorée est très mince relativement à l'épaisseur de la couche inférieure. Le brevet mentionné ci-dessus décrit une tête d'extrusion munie d'un dispositif permettant de changer la couleur de cette couche pelliculaire externe colorée de manière simple, ledit dispositif étant placé légèrement en amont, dans le sens d'écoulement des flux de matière, de la tête d'extrusion. Cette position en amont du dispositif de changement de couleur représente un inconvénient dans la mesure où lorsqu'on change de couleur, la nouvelle couleur peut se mélanger sur une certaine distance avec l'ancienne couleur faisant qu'une longueur non négligeable, dépendant de la vitesse de la ligne, du produit extrudé doit être ultérieurement éliminée vu l'imprécision de passage d'une couleur à l'autre. Un autre inconvénient de ce genre de dispositif qui doit être éliminé provient de ce que de la matière extrudée ayant pu stagner dans la tête d'extrusion, et par conséquent se dégrader, est susceptible de se retrouver sur le produit fini.

Du document DE-A-37 35 279 on connait une tête d'extrusion correspondant au préambule de la revendication de dispositif 1.

Un premier but de l'invention est donc de proposer une tête d'extrusion apte à extruder simultanément deux couches, et munie d'un dispositif permettant de modifier la couleur de la couche extérieure, sans rencontrer les inconvénients des dispositifs de l'art antérieur; en particulier, la zone de transition entre les deux couleurs sur le produit fini doit être aussi réduite que possible et aucune matière ayant pu stagner dans la tête d'extrusion ne doit se retrouver sur le produit fini.

Un autre but de l'invention est de proposer une tête d'extrusion dont le dispositif de changement de couleur soit simple à actionner et de fonctionnement sûr.

Encore un autre but de l'invention est de proposer une tête d'extrusion apte à extruder tous les matériaux usuels dans ce genre de technique, notamment, et dans le cas particulier de l'extrusion d'une isolation sur un conducteur, cette isolation doit pouvoir être pleine ou de type expansé.

Un autre but de l'invention est de proposer une tête d'extrusion apte à extruder un produit bicolore.

Enfin encore un autre but est de proposer une ligne d'extrusion équipée d'une telle tête d'extrusion.

Il est nécessaire de se rappeler que pour atteindre ces différents buts, on travaille avec des produits extrudés de haute viscosité, à haute température, à haute pression et avec des vitesses de ligne relativement importantes.

Ces buts sont obtenus par une tête d'extrusion possédant les caractéristiques mentionnées dans la revendication 1 et les variantes mentionnées dans les revendications 2 à 9. De plus, selon la variante de conformation du dispositif comme décrite dans la revendication 11, il est possible d'extruder un produit dont le revêtement extérieur est bicolore. Une ligne d'extrusion est décrite à la revendication 12.

L'invention est décrite plus en détail ci-dessous en se référant au dessin en annexe comportant les figures où:
la figure 1 représente une vue en coupe d'une tête d'extrusion selon l'invention,
la figure 2 représente une vue partielle en coupe d'une tête d'extrusion munie d'un autre type de dispositif de commande de changement de couleur, et
les figures 3A et 3B représentent deux vues de détail en coupe de moyens permettant d'extruder simultanément deux couleurs différentes.

La description qui suit ainsi que les figures montrent une tête d'extrusion adaptée à l'extrusion d'une isolation sur un conducteur; cette application particulière ne peut être considérée comme limitative de l'invention. Une telle tête peut aussi être utilisée pour l'extrusion d'un revêtement à double couche sur une fibre optique, de même que pour l'extrusion de tous produits de géométrie circulaire comme des tubes ou des barres. En modifiant la géométrie de la tête d'extrusion, il est possible d'extruder toutes sortes de profilés, voire même des plaques planes comportant deux ou trois couches. L'homme du métier est capable d'adapter les dispositifs décrits ci-dessous à ces différentes possibilités.

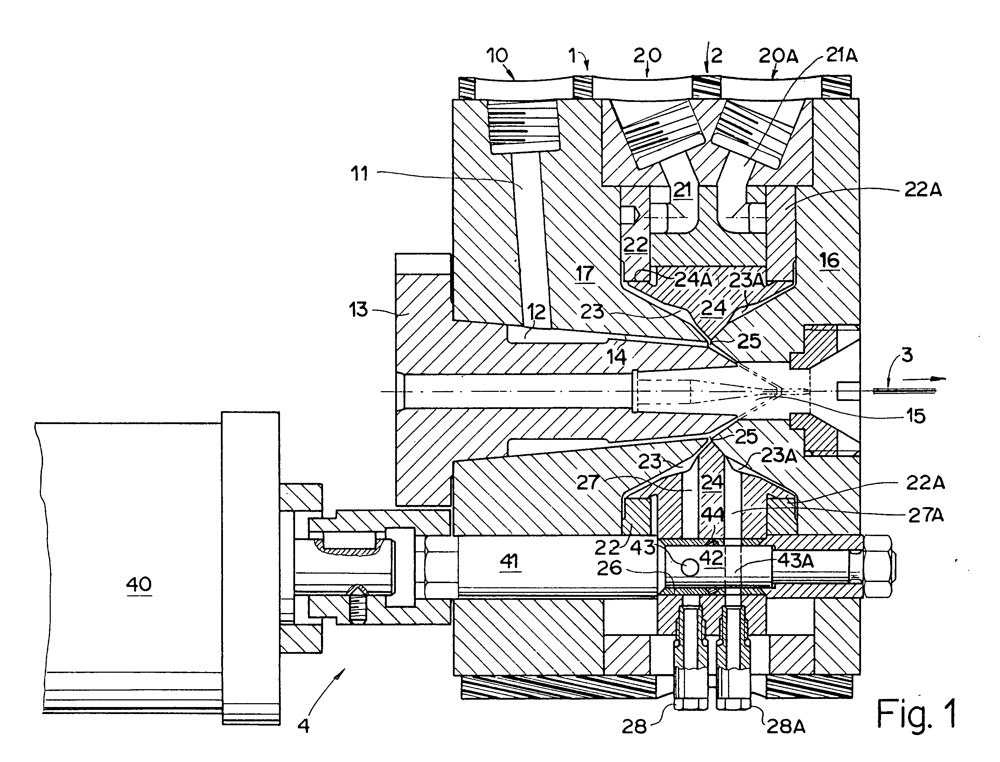

La figure 1 montre une première forme d'exécution d'une tête d'extrusion 1 selon l'invention comportant en particulier un premier orifice d'admission 10, relié à une extrudeuse principale non représentée sur la figure. Par le canal 11, la matière extrudée en provenance de cette extrudeuse principale est tout d'abord amenée radialement à travers la tête d'extrusion vers une gorge circonférentielle 12 entourant un porte-filière 13 pour ensuite se distribuer tout autour du porte-filière et suivre le canal extérieur 14 en direction de la filière 15. Cette matière extrudée en provenance de l'extrudeuse principale formera la couche inférieure, respectivement la couche d'isolation. Cette disposition des éléments et ce cheminement de la matière extrudée sont généralement connus de la technique. La tête d'extrusion 1 est complétée par un dispositif 2 permettant de sélectionner la couleur du revêtement extérieur de l'isolation. Deux extrudeuses auxiliaires, non représentées sur la figure, extrudant chacune un produit d'une couleur différente, débouchent sur un deuxième orifice d'admission 20 et un troisième orifice d'admission 20A. Par l'intermédiaire de canalisations coudées 21 et 21A, chacun des flux de matière extrudée en provenance des extrudeuses auxiliaires est amené vers un répartiteur circulaire 22, 22A, lesquels, par un jeu de forures conduisent les flux de matière vers deux chambres annulaires 23 et 23A situées de part et d'autre d'un pointeau mobile 24. Le pointeau mobile 24 entoure complètement une portion avant du porte-filière 13 et est apte à se déplacer légèrement, de l'ordre de 1 à 2 mm selon une direction axiale, respectivement selon la direction de passage du conducteur à isoler dans la tête 1, par des moyens qui seront décrits plus loin. On voit sur la figure que le pointeau mobile 24 s'appuie sur des surfaces d'appui 24A, en butée contre des surfaces d'appui correspondantes des répartiteurs circulaires 22 et 22A. Dans la position représentée sur la figure, le pointeau mobile est en position avancée, respectivement vers la droite de la figure, permettant que la chambre annulaire 23 soit en liaison, via le canal annulaire 25, disposé entre une partie avant 16 et une partie arrière 17 de la tête d'extrusion 1, avec une portion avant extérieure du canal extérieur 14 conduisant déjà la matière extrudée en provenance de l'extrudeuse principale. Ainsi, le flux de matière en provenance de l'extrudeuse auxiliaire reliée à l'orifice d'admission 20, passant par le canal coudé 21, le répartiteur circulaire 22, la chambre 23 et le canal annulaire 25 vient entourer le flux principal de matière, donnant ainsi la coloration voulue au conducteur isolé 3 sortant de la tête d'extrusion 1 après passage dans la filière et le pointeau d'extrusion, juste esquissés en traits interrompus sur la figure.

Une forme d'exécution préférentielle des moyens 4 permettant de commander le déplacement du pointeau mobile 24 est constituée ici par un actionneur 40 apte à faire pivoter un axe de commande 41, dans un sens et dans l'autre, d'un quart de tour. L'axe de commande 41 est placé parallèlement à l'axe principal de la tête d'extrusion 1, respectivement à l'axe de passage du conducteur isolé 3. Une portion 42 de l'axe 41 est logée dans un logement circulaire 26 du pointeau mobile 24, et comprend deux canaux 43 et 43A décalés angulairement d'un quart de tour. Le pointeau mobile 24 comprend lui aussi deux canaux radiaux 27 et 27A qui passent par le logement circulaire 26 et débouchent sur des orifices de sortie 28 et 28A; les canaux radiaux 27 et 27A correspondent avec les canaux 43 et 43A de la manière suivante. Pour une position angulaire déterminée de l'axe de commande 41, celle représentée sur la figure, le canal 43 est disposé perpendiculairement au canal 27, interrompant ainsi sa liaison avec son orifice de sortie 28, alors que le canal 43A permet la liaison du canal radial 27A avec son orifice de sortie 28A. Une rotation d'un quart de tour de l'axe de commande 41 interrompt la liaison du canal radial 27A avec son orifice de sortie 28A et permet la liaison du canal radial 27 avec son orifice de sortie 28.

Il est possible maintenant de décrire le fonctionnement de la tête d'extrusion 1 selon l'invention. Une première extrudeuse alimente le premier orifice d'admission 10 en matière extrudée, de préférence non colorée. De manière conventionnelle, cette matière passe par le canal 11 et se répartit autour du porte-filière 13 en suivant le canal extérieur 14. Le débit de matière extrudée fourni par cette première extrudeuse peut être relativement important puisque cette matière constituera l'essentiel de l'isolation du conducteur isolé 3. Deux autres extrudeuses, de plus faible débit, alimentent les orifices d'admission 20 et 20A en matière extrudée, chaque extrudeuse fournissant une matière d'une couleur différente. Comme décrit précédemment, les deux flux de matière extrudée colorée parviennent dans les deux chambres annulaires 23 et 23A entourant le pointeau mobile 24. En examinant la figure, on voit que la matière contenue dans la chambre 23 ne peut s'échapper par le canal 27 et l'orifice de sortie 28, vu que l'axe de commande 41 est positionné afin de bloquer ce passage; par contre la matière contenue dans la chambre 23A peut s'échapper par l'orifice 28A, celui-ci étant en liaison avec ladite chambre par les canaux 27A et 43A. Ainsi, la pression dans la chambre 23 tendra à augmenter alors que la pression dans la chambre 23A restera faible, ce qui aura pour effet de pousser le pointeau mobile 24 vers l'avant, respectivement vers la droite de la figure libérant ainsi le passage entre la chambre 23 et le canal annulaire 25. De cette manière, la matière extrudée contenue dans la chambre 23, qui est d'une première couleur et provient de la première extrudeuse auxiliaire, vient entourer le flux principal de matière extrudée circulant déjà dans le canal extérieur 14 et recouvre cette matière d'une pellicule colorée. Par la suite, le flux de matière constitué d'une couche extérieure colorée superposée à unecouche inférieure non colorée continue de suivre le canal extérieur 14, en direction de la filière 15 pour recouvrir le conducteur de manière conventionnelle. Après l'ouverture du passage entre la chambre 23 et le canal annulaire 25, la pression régnant dans la chambre 23 reste supérieure à celle régnant dans la chambre 23A, maintenant ainsi le pointeau mobile 24 en position.

Si on désire changer la couleur de revêtement sur le conducteur isolé 3, il suffit de commander l'actuateur 40 afin qu'il fasse faire un quart de tour à l'axe de commande 41, respectivement qu'il bloque le passage du canal 27A et libère celui du canal 27 afin de faire augmenter la pression dans la chambre annulaire 23A et baisser celle de la chambre 23 commandant ainsi le déplacement du pointeau mobile 24 vers l'arrière, respectivement vers la gauche de la figure, interrompant de ce fait la communication entre la chambre 23 et le canal annulaire 25 et mettant ce dernier en liaison avec la chambre 23A qui contient une matière selon une autre couleur. Ainsi la matière colorée selon la couleur débitée par la deuxième extrudeuse auxiliaire vient maintenant entourer le flux d'isolant.

Ainsi, en actionnant l'axe de commande 41 d'un quart de tour, il est possible de changer rapidement et simplement la couleur de la couche superficielle du conducteur isolé.

De préférence, et afin d'éviter de devoir monter des joints rotatifs et coulissants sur la portion 42 de l'axe de commande 41, celui-ci ou au moins sa portion 42 est aussi apte à se déplacer axialement avec le pointeau mobile 24 permettant ainsi de ne prévoir que des joints rotatifs 44 de technique connue. L'actionnement de l'axe de commande 41 peut être effectué par n'importe quel moyen permettant de faire pivoter cet axe de 90°, la forme d'exécution préférentielle prévoit un actuateur 40 de type pneumatique ou hydraulique, mais des moyens plus simples peuvent aussi être prévus, par exemple une extrémité dudit axe peut être terminée par un six-pans ou un carré permettant d'actionner l'axe à l'aide d'une clé adéquate.

La figure ne représente qu'une vue du principe de fonctionnement de la tête d'extrusion, les moyens connus de la technique permettant de positionner, de fixer entre eux les divers composants de cette tête et d'assurer l'étanchéité nécessaire entre eux, de même que les moyens de fixation de la tête sur l'extrudeuse ne sont pas représentés.

Dans le mode de fonctionnement décrit ci-dessus, il est dit que les deux extrudeuses auxiliaires fonctionnent simultanément et que la matière extrudée colorée non utilisée est éliminée vers l'extérieur. De préférence l'extrudeuse dont la matière n'est pas utilisée pour l'instant pour colorer le conducteur isolé est arrêtée ou sa vitesse de fonctionnement respectivement son débit de matière est fortement diminué afin d'économiser de la matière colorante. Un autre avantage d'arrêter ou diminuer la vitesse de fonctionnement de cette extrudeuse est qu'ainsi la pression dans la chambre annulaire reliée à cette extrudeuse diminue encore, assurant ainsi un meilleur maintien du pointeau mobile 24 en position. Lorsqu'on désirera changer de couleur de revêtement, il suffira quelques instants auparavant de remettre l'extrudeuse non utilisée à vitesse nominale afin d'éliminer la matière dégradée puis de commander le changement de couleur et enfin d'arrêter ou ralentir l'autre extrudeuse non utilisée.

Les avantages notables de cette tête d'extrusion par rapport à celles de l'art antérieur, sont notamment la très faible longueur de conduit commun ou les deux matières colorées pourraient se mélanger lors d'un changement de couleur, en fait et comme on le voit sur la figure ce mélange ne peut avoir lieu que dans le canal annulaire 25 dont la longueur peut être inférieure à 1 mm. On obtient ainsi un changement de couleur très précis sur le conducteur isolé. De plus, vu l'écoulement de la matière colorée non utilisée vers l'extérieur, au moins juste avant le changement de couleur et vu que de la matière colorée ne peut stagner que dans la portion du canal 27 ou 27A obturé par la portion 42 de l'axe 41, soit en aval dans le sens d'écoulement des flux de matière par rapport au point d'injection sur le conducteur à isoler, cette matière ne pouvant ainsi que s'échapper vers l'extérieur lors du prochain changement de couleur, on est assuré qu'aucune matière dégradée ne peut parvenir sur le conducteur isolé.

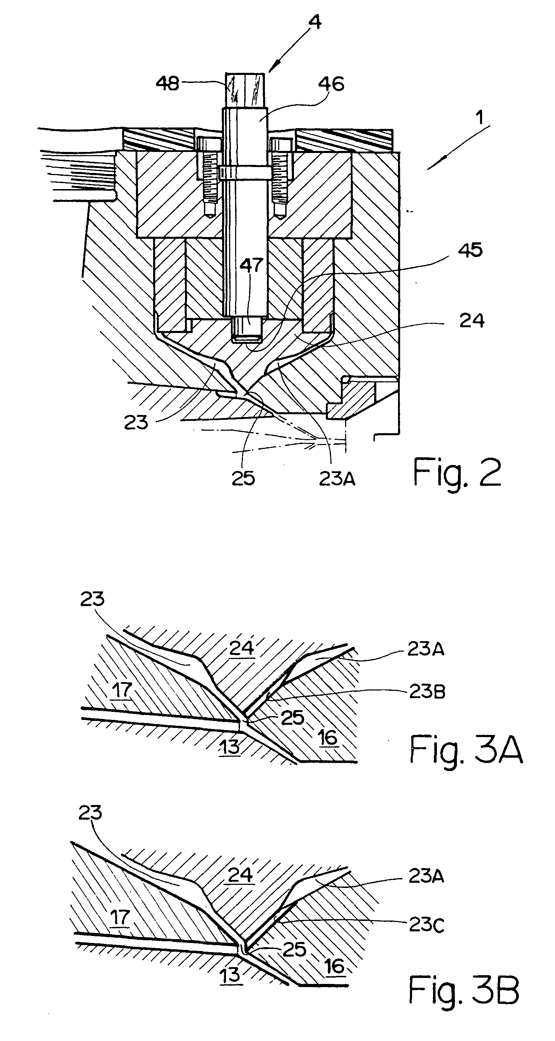

Une deuxième forme d'exécution des moyens de commande 4 de déplacement du pointeau mobile 24 est représentée à la figure 2, sur laquelle on ne voit qu'une portion de la tête d'extrusion 1. Le pointeau mobile 24 comporte au moins une portion de fente 45 disposée sur son périmètre extérieur, la portion de fente s'étendant sur une certaine longueur dudit périmètre. Un axe de commande 46 pivote dans un logement circulaire adéquat de la tête, l'extrémité de cet axe proche du pointeau mobile 24 comportant une portion cylindrique 47 dont l'axe est légèrement décalé dans la direction axiale de la tête 1. Le diamètre de la portion cylindrique 47 est très légèrement inférieur à la largeur de la fente 45, de manière à ce qu'elle puisse s'y engager. L'autre extrémité de l'axe de commande 46 est ici munie d'un carré 48 permettant de commander le pivotement dudit axe. Ainsi, selon une première position angulaire de l'axe de commande 46, la portion cylindrique 47 appuie sur une première face de la fente 45, pressant le pointeau mobile 24 dans cette direction, alors qu'en faisant pivoter l'axe de commande 46 d'un demi-tour, la portion cylindrique 47 viendra appuyer la face opposée de la fente 45, pressant alors le pointeau mobile 24 dans l'autre direction. Comme pour la forme d'exécution précédente, selon la direction selon laquelle le pointeau mobile 24 est pressé, c'est la chambre annulaire 23 ou 23A qui est mise en liaison avec le canal annulaire 25. De préférence le pointeau mobile 24 sera muni de plusieurs fentes 25, respectivement de plusieurs axes de commande 46, répartis sur sa circonférence, de manière à éviter un positionnement en biais du pointeau mobile 24 dans son logement. Le nombre d'axes de commande 46 dépend essentiellement de la grandeur de la tête d'extrusion 1, respectivement du diamètre sur isolation du conducteur isolé 3; pour un conducteur de faible diamètre, par exemple pour du fil téléphonique, deux axes de commande peuvent être suffisants alors que trois ou quatre axes de commande pourraient être nécessaires pour des conducteurs de plus gros diamètres. La commande de pivotement de l'axe de commande 46 a été décrite comme étant obtenue par une clé actionnant le carré 48; il est bien entendu qu'un dispositif du même type que l'actuateur 40 de la forme d'exécution précédente peut aussi être utilisé.

Les deux formes décrites ci-dessus de moyens de commande de déplacement du pointeau mobile 24 peuvent être combinées, le ou les dispositifs comportant le cylindre excentré 47 agissant sur la fente 45 servant alors plutôt de verrouillage et de sécurité lorsque le changement de couleur a été commandé par le dispositif comportant l'axe de commande 41.

Deux formes d'exécution particulières du passage entre l'une des chambres 23 ou 23A et le canal annulaire 25 sont représentées aux figures 3A et 3B permettant d'extruder un conducteur isolé bicolore, respectivement comportant une couleur de fond et une ou plusieurs raies longitudinales d'une autre couleur. Pour ceci, au moins une portion de l'une des faces d'appui du pointeau mobile 24, comprend une ouverture 23B (figure 3A) permettant de mettre en liaison la chambre 23A avec le canal 25 bien que le pointeau 24 soit appuyé contre la portion avant 16 de la tête d'extrusion. Ainsi, la matière colorée en provenance de la chambre 23 va constituer la couleur de fond, alors que celle en provenance de la chambre 23A va constituer une ou plusieurs lignes, dépendant du nombre d'ouvertures 23B, et dont la largeur circonférentielle va dépendre de la largeur circonférentielle desdites ouvertures. En variante, et comme représenté sur la figure 3B, des ouvertures 23C peuvent être aménagées sur les surfaces d'appui de la pièce formant la portion avant 16. Dans ces deux cas, en repoussant le pointeau mobile 24 vers l'arrière, respectivement vers la gauche des figures, le canal 25 n'est plus alimenté que par le matériau coloré en provenance de la chambre 23A; le conducteur isolé étant alors monocolore. Il est évident que les ouvertures 23B et 23C peuvent être aménagées de l'autre côté du pointeau mobile 24. L'actionnement du pointeau mobile 24 est obtenu selon l'une ou l'autre des formes d'exécution des moyens d'actionnement décrits plus haut.

L'homme du métier saura adapter la construction décrite ci-dessus pour d'autres types de produits extrudés que ceux mentionnés; en particulier pour l'extrusion d'un revêtement coloré sur une fibre optique ou pour celle d'une isolation expansée. La géométrie de la tête qui est ici circulaire peut aussi facilement être modifiée pour s'adapter à d'autres produits à extruder. Une tête d'extrusion comme décrite peut facilement être installée sur une extrudeuse existante, qui fera alors office d'extrudeuse principale, les deux extrudeuses auxiliaires étant à ajouter à la ligne, ou alors elle peut facilement et avantageusement être installée à la place de la tête d'extrusion et du dispositif séparé d'inversion des couleurs décrits dans le brevet déjà mentionné.

## Revendications

1. Tête d'extrusion (1) apte à extruder une couche superficielle, de préférence colorée, par-dessus une première couche, de préférence non colorée, cette tête d'extrusion étant reliée directement à une première extrudeuse délivrant un produit extrudé destiné à former ladite première couche non colorée ainsi qu'à deux autres extrudeuses délivrant chacune un produit extrudé d'une couleur différente destiné à former ladite couche superficielle, ladite tête d'extrusion comportant un dispositif de sélection (2) apte à diriger sélectivement l'un ou l'autre des produits extrudés colorés dans un canal (25) aménagé entre une partie avant (16) et une partie arrière (17) de la tête d'extrusion pour déposer la matière colorée au-dessus de la dite première couche,
caractérisée en ce que le dispositif de sélection (2) est constitué notamment :
- d'un pointeau mobile (24) déplaçable axialement à la tête d'extrusion, notamment dans le canal (25) entre les parties avant (16) et arrière (17) de la tête qui définissent ce canal, sensiblement tangentiellement à la première couche de matière,
- deux chambres (23, 23A) situées de part et d'autre du pointeau mobile (24) de manière telle que selon sa position avant ou arrière ce pointeau puisse, simultanément, d'une part, établir une première liaison entre la première chambre (23, 23A) remplie d'un produit extrudé d'une première couleur et le canal (25) conduisant ledit produit au-dessus du produit extrudé formant la première couche et, d'autre part, obturer une deuxième liaison entre la deuxième chambre (23A, 23) remplie d'un produit extrudé d'une deuxième couleur et ledit canal (25), ou, respectivement à simultanément interrompre ladite première liaison et établir ladite deuxième liaison,
- un moyen de commande du déplacement du pointeau (41, 46).

2. Tête d'extrusion selon la revendication 1, caractérisée en ce que le dispositif de sélection (2) comporte en outre des moyens d'obturation (43,43A) pour simultanément obturer un échappement (27,28;27A,28A) de matière extrudée colorée de l'une des chambres (23;23A), conduisant à une augmentation de pression dans ladite chambre, et pour permettre l'échappement (27A,28A;27,28) de matière extrudée colorée de l'autre chambre (23A;23), conduisant à une diminution de pression dans ladite autre chambre, le déplacement axial du pointeau mobile étant provoqué par la différence de pression entre les deux chambres (23,23A).

3. Tête d'extrusion selon la revendication 2, caractérisée en ce que lesdits moyens d'obturation sont constitués de deux canaux (43,43A) disposés transversalement et décalés angulairement entre eux, les deux dits canaux étant situés sur une portion (42) d'un axe de commande (41) apte à prendre deux positions angulaires déterminées, ladite portion (42) dudit axe, étant située dans un logement circulaire (26) aménagé dans une portion dudit pointeau mobile (24), chacun desdits canaux étant apte à obturer, respectivement permettre l'échappement de matière colorée desdites chambres selon la position angulaire de l'axe de commande (41).

4. Tête d'extrusion selon la revendication 3, caractérisée en ce que les deux positions angulaires déterminées de l'axe de commande (41), ainsi que les deux canaux (43,43A) aménagés transversalement dans une portion (42) dudit axe sont décalés de 90°.

5. Tête d'extrusion selon l'une des revendications 3 ou 4, caractérisée en ce qu'au moins la portion (42) de l'axe de commande (41) située dans le logement circulaire (26) aménagé dans le pointeau mobile (24) peut coulisser axialement avec ledit pointeau.

6. Tête d'extrusion selon la revendication 1, caractérisée en ce que lesdits moyens de commande de déplacement du pointeau mobile sont constitués d'au moins un axe de commande (46) disposé radialement dans un logement de ladite tête, une extrémité dudit axe comportant une portée cylindrique (47) dont l'axe est décalé par rapport à celui de l'axe de commande, ladite portée cylindrique étant engagée dans une fente (45) aménagée dans une portion supérieure du pointeau mobile (24), un pivotement d'un demi-tour dudit axe de commande étant apte à commander le déplacement axial dudit pointeau mobile.

7. Tête d'extrusion selon la revendication 1, caractérisée en ce qu'elle comprend un moyen de commande de déplacement du pointeau mobile selon l'une des revendications 2 à 5, associé avec au moins un autre moyen de commande de déplacement du même pointeau mobile selon la revendication 6.

8. Tête d'extrusion selon l'une des revendications 2 à 7, caractérisée en ce qu'au moins un axe de commande (41;46) est actionné en pivotement par un actuateur pneumatique ou hydraulique (40).

9. Tête d'extrusion selon l'une des revendications 2 à 7, caractérisée en ce qu'au moins un axe de commande (41;46) est actionné en pivotement par l'intermédiaire d'une clé de forme, une extrémité (48) dudit axe de commande étant aménagée selon la forme correspondante.

10. Tête d'extrusion selon l'une des revendications précédentes, caractérisée en ce qu'au moins un passage partiel (23B;23C) est aménagé entre le pointeau mobile (24) et une portion de surface sur lequel il s'appuie en position de fermeture, afin de laisser libre le passage d'un produit extrudé d'une couleur venant se combiner avec le produit extrudé de l'autre couleur afin de former un revêtement bicolore.

11. Ligne d'extrusion équipée notamment d'une première extrudeuse et de deux extrudeuses auxiliaires, caractérisée en ce qu'elle comprend aussi une tête d'extrusion selon l'une des revendications précédentes.

## Patentansprüche

1. Extrusionsdüse (1) zum Extrudieren einer Oberflächenschicht, vorzugsweise farbig, über eine erste Schicht, vorzugsweise farblos, welche Extrusionsdüse direkt an einem ersten Extruder befestigt ist, welcher ein Extrudierprodukt liefert, das zur Bildung der genannten farblosen ersten Schicht bestimmt ist, sowie an zwei weiteren Extrudern, von welchen jeder ein Extrudierprodukt mit verschiedenen Farben liefert, die zur Bildung der genannten Oberflächenschicht bestimmt sind, wobei die genannte Extrusionsdüse eine Selektionseinrichtung (2) umfasst, mit welcher wahlweise das eine oder das andere der farbigen Extrudierprodukte in einen Kanal (25) leitbar ist, der zwischen einem vorderen Teil (16) und einem hinteren Teil (17) der Extrusionsdüse angeordnet ist, um das farbige Material über die genannte erste Schicht aufzubringen,
dadurch gekennzeichnet, dass die Selektionseinrichtung (2) insbesondere umfasst:
eine bewegliche Düsennadel (24), die axial verschiebbar in der Extrusionsdüse angeordnet ist, insbesondere im Kanal (25) zwischen den vorderen (16) und hinteren Teilen (17) der Düse, die den Kanal definieren, im wesentlichen tangentiell zur ersten Materialschicht,
zwei Kammern (23, 23A), die beiderseits der beweglichen Düsennadel (24) angeordnet sind, so dass gemäss ihrer vorderen oder hinteren Position diese Nadel gleichzeitig einerseits eine erste Verbindung zwischen der ersten Kammer (23, 23A), die mit einem ersten Extrudierprodukt mit einer ersten Farbe gefüllt ist, und dem Kanal (25) errichtet, welcher das genannte Produkt über das extrudierte Produkt führt, das die erste Schicht bildet, und andererseits eine zweite Verbindung zwischen der zweiten Kammer (23A, 23), die mit einem Extrudierprodukt mit einer zweiten Farbe gefüllt ist, und dem Kanal (25) verschliesst, oder entsprechend gleichzeitig die genannte erste Verbindung unterbricht und die genannte zweite Verbindung errichtet,
ein Steuermittel zur Verschiebung der Nadel (41, 46).

2. Extrusionsdüse nach Anspruch 1, dadurch gekennzeichnet, dass die Selektionseinrichtung (2) unter anderem Verschliessmittel (43, 43A) umfasst, um gleichzeitig einen Auslass (27, 28; 27A, 28A) für farbiges Extrudiermaterial von der einen Kammer (23, 23A) zu verschliessen, was zu einer Zunahme des Druckes in dieser Kammer führt, und um einen Auslass (27A, 28A; 27, 28) des farbigen Extrudiermaterials aus der anderen Kammer (23A; 23) zu erlauben, was zu einem Absinken des Druckes in dieser anderen Kammer führt, und das axiale Verschieben der beweglichen Düsennadel durch den Unterschied des Druckes zwischen den beiden Kammern (23, 23A) erzeugbar ist.

3. Extrusionsdüse nach Anspruch 2, dadurch gekennzeichnet, dass die genannten Verschliessmittel aus zwei Kanälen (43, 43A) gebildet sind, die transversal und winklig gegeneinander versetzt angeordnet sind, und die zwei genannten Kanäle auf einem Bereich (42) einer Steuerachse (41) angebracht sind und zwei vorbestimmte Winkelpositionen einnehmen können, und der Bereich (42) der genannten Achse in einer kreisförmigen Aufnahme (26), angeordnet in einem Bereich der beweglichen Düsennadel (24), angebracht ist, und jeder dieser Kanäle verschliessbar ist, bzw. den Auslass des farbigen Materials aus diesen Kammern erlaubt, abhängig von der Winkelposition der Steuerachse (41).

4. Extrusionsdüse nach Anspruch 3, dadurch gekennzeichnet, dass die beiden vorbestimmten Winkelpositionen der Steuerachse (41) wie auch die beiden transversal in einem Bereich (42) der genannten Achse verlaufenden Kanäle (43, 43A) um 90° versetzt sind.

5. Extrusionsdüse nach einem der Ansprüche 3 oder 4, dadurch gekennzeichnet, dass mindestens der Bereich (42) der Steuerachse (41), angeordnet in der kreisförmigen Aufnahme (26), in der beweglichen Düsennadel (24) mit der genannten Düsennadel axial gleiten kann.

6. Extrusionsdüse nach Anspruch 1, dadurch gekennzeichnet, dass die genannten Steuermittel zur Verschiebung der beweglichen Düsennadel aus mindestens einer Steuerachse (46) gebildet sind, die radial in einer Aufnahme des genannten Düse angeordnet sind, und ein Ende dieser Achse einen zylindrischen Zapfen (47) umfasst, dessen Achse bezüglich derjenigen der Steuerachse verschoben ist, und der genannte zylindrische Zapfen in einen Schlitz (45) eingreift, der in einem oberen Bereich der beweglichen Düsennadel (24) angeordnet ist, wodurch ein Verdrehen um eine halbe Umdrehung der genannten Steuerachse möglich ist, um die axiale Verschiebung der genannten beweglichen Düsennadel zu steuern.

7. Extrusionsdüse nach Anspruch 1, dadurch gekennzeichnet, dass sie ein Steuermittel zum Verschieben der beweglichen Düsennadel nach einem der Ansprüche 2 bis 5 umfasst, verbunden mit mindestens einem anderen Steuermittel zum Verschieben der gleichen beweglichen Düsennadel nach Anspruch 6.

8. Extrusionsdüse nach einem der Ansprüche 2 bis 7, dadurch gekennzeichnet, dass mindestens eine Steuerachse (41; 46) drehbar angetrieben ist durch einen pneumatischen oder hydraulischen Antrieb (40).

9. Extrusionsdüse nach einem der Ansprüche 2 bis 7, dadurch gekennzeichnet, dass mindestens eine Steuerachse (41; 46) drehbar angetrieben ist mittels eines Formschlüssels, wobei ein Ende (48) der genannten Steuerachse mit einer entsprechenden Form ausgestattet ist.

10. Extrusionsdüse nach einem der vorhergehenden Ansprüche, dadurch gekennzeichnet, dass mindestens ein Teildurchgang (23B; 23C) zwischen der beweglichen Düsennadel (24) und einem Oberflächenbereich angebracht ist, auf welchem sie sich in der Schliessposition abstützt, um einen Durchlass für ein Extrudiermaterial der einen Farbe freizulassen, das sich mit dem Extrudiermaterial der anderen Farbe vereinigt, um einen zweifarbigen Überzug zu bilden.

11. Extrusionslinie, insbesondere ausgestattet mit einem ersten Extruder und zwei Hilfsextrudern, dadurch gekennzeichnet, dass sie auch eine Extrusionsdüse nach einem der vorhergehenden Ansprüche umfasst.

## Claims

1. Extrusion head (1) capable of extruding a surface layer, preferably coloured, over a first layer, preferably not coloured, this extrusion head being connected directly to a first extruder delivering an extrudate intended to form said first, non-coloured layer, as well as to two other extruders, each delivering an extrudate of a different colour intended to form said surface layer, said extrusion head comprising a selection device (2) capable of selectively directing one or the other of the coloured extrudates in a duct (25) provided between a front part (16) and a rear part (17) of the extrusion head for depositing the coloured material over the said first layer,
characterised in that the selection device (2) is made up of in particular:
a movable needle device (24), axially displaceable with respect to the extrusion head, in particular in a duct (25) between the front (16) and rear (17) parts of the head which define this duct, substantially tangentially with respect to the first layer of material,
two chambers (23, 23A) situated on either side of the movable needle device (24) in such a way that, depending upon its forward or rear position, this needle device can simulaneously, on the one hand, establish a first connection between the first chamber (23, 23A) filled with an extrudate of a first colour and the duct (25) conducting said extrudate over the extrudate forming the first layer, and, on the other hand, blocking a second connection between the second chamber (23A, 23) filled with an extrudate of a second colour and said duct (25), or, respectively cut off simultaneously said first connection and establish said second connection,
- a needle device displacement control means (41, 46).

2. Extrusion head according to claim 1, characterised in that the selection device (2) further comprises blocking means (43, 43A) for simultaneously blocking an escape (27, 28; 27A, 28A) of coloured extrudate from one of the chambers (23; 23A), leading to an increase in pressure in said chamber, and for permitting the escape (27A, 28A; 27, 28) of coloured extrudate from the other chamber (23A, 23), leading to a reduction in pressure in said other chamber, the axial displacement of the movable needle device being brought about by the difference in pressure between the two chambers (23, 23A).

3. Extrusion head according to claim 2, characterised in that said blocking means are made up of two ducts (43, 43A), disposed transversely and shifted angularly with respect to one another, the said two ducts being situated on a portion (42) of a control shaft (41) capable of assuming two predetermined angular positions, said portion (42) of said shaft being situated in a circular seat (26) contrived in a portion of said movable needle device (24), each of said ducts being capable of blocking and/or permitting the escape of coloured material from said chambers according to the angular position of the control shaft (41).

4. Extrusion head according to claim 3, characterised in that the two predetermined angular positions of the control shaft (41), as well as said two ducts (43, 43A) contrived transversely in a portion (42) of said shaft, are shifted by 90 degrees.

5. Extrusion head according to one of the claims 3 or 4, characterised in that at least the portion (42) of the control shaft (41) situated in the circular seat (26) contrived in the movable needle device (24) can slide axially with said needle device.

6. Extrusion head according to claim 1, characterised in that said means for controlling the displacement of said movable needle device are made up of at least one control shaft (46) disposed radially in a seat in said head, one end of said shaft comprising a cylindrical bearing surface (47), the axis of which is shifted relative to that of the control shaft, said cylindrical bearing surface being engaged in a slot (45) contrived in an upper portion of said movable needle device (24), pivoting of said control shaft by half a turn being capable of controlling the axial displacement of said movable needle device.

7. Extrusion head according to claim 1, characterised in that it comprises a means for controlling the displacement of the needle device according to one of the claims 2 to 5 associated with at least one other means of controlling the displacement of the same movable needle device according to claim 6.

8. Extrusion head according to one of the claims 2 to 7, characterised in that at least one control shaft (41; 46) is pivotingly actuated by a pneumatic or hydraulic actuator (40).

9. Extrusion head according to one of the claims 2 to 7, characterised in that at least one control shaft (41; 46) is pivotingly actuated by means of a shaped wrench, one end (48) of said control shaft being fitted according to the matching shape.

10. Extrusion head according to one of the preceding claims, characterised in that at least one partial passage (23B; 23C) is contrived between said movable needle device (24) and a surface portion on which it rests in closing position, in order to leave free the passage of an extrudate of one colour coming to be combined with the extrudate of the other colour in order to form a two-colour coating.

11. Extrusion line equipped in particular with a first extruder and two auxiliary extruders, characterised in that it also comprises an extrusion head according to one of the preceding claims.
